# EUROPEAN PATENT SPECIFICATION

(11) **EP 4 147 318 B1**
(45) Date of publication and mention of the grant of the patent: **13.03.2024**
(21) Application number: 21724348.4
(22) Date of filing: 30.04.2021
(51) Int. Cl.: H02J 3/14, H02J 13/00, H05B 47/18

(54) **A MODULAR APPARATUS TO MONITOR AND CONTROL ENERGY USAGE**
MODULARE VORRICHTUNG ZUR ÜBERWACHUNG UND STEUERUNG DES ENERGIEVERBRAUCHS
APPAREIL MODULAIRE POUR SURVEILLER ET COMMANDER L'UTILISATION D'ÉNERGIE

(30) Priority: 04.05.2020 FI 20205450
(43) Date of publication of application: 15.03.2023
(73) Proprietor: RIOT INNOVATIONS OY, 02150 Espoo (FI)
(72) Inventor: KARVINEN, Miska, 02150 Espoo (FI)
(74) Representative: Papula Oy
(86) International application number: PCT/FI2021/050323
(87) International publication number: WO 2021/224547

(56) References cited:
- US-A1- 2003 126 253
- US-A1- 2011 185 198
- US-A1- 2012 286 723
- US-A1- 2014 042 811
- US-A1- 2014 046 498
- US-A1- 2015 244 121

## Description

### TECHNICAL FIELD

The present application relates to the field of electrical technology. In particular, example embodiments relate to an apparatus with a modular structure and to demand-side management implemented using the apparatus to control energy consumption.

### BACKGROUND

Generally, electricity consumption is rising both in industry and households. Therefore, there is a growing interest for monitoring and optimizing energy usage. Furthermore, the increasing number of electrical devices may cause safety risks in case of malfunctions which may lead to, for example, a fire hazard. Hence, it may be desired to control power of the devices for optimization purposes as well as to ensure safety aspects. Another trend in the field of energy is the spread of use of alternative energy sources due to a fall in the prices of the alternative energy technologies. For example, in off-grid locations where weather dependent alternative energy sources may be solely used, the importance of optimizing energy consumption may be emphasized. One example is US2011/185198.

### SUMMARY

It is an objective to provide an apparatus capable of individually controlling power output modules based on, for example, energy consumption data. The apparatus is adaptable such that the number of power output modules may be easily increased and decreased. The objective is achieved by the features of the independent claims. Some embodiments are described in the dependent claims. According to an aspect, there is provided an apparatus.

The apparatus comprises a control module comprising a communication interface configured to transmit and receive data to/from at least one external device and at least one bus slot configured to receive a power output module; at least one power output module removably attachable to at least one of the control module or one or more power output modules with a bus connection; and at least one bus configured to provide a data connection between the control module and the at least one power output module; wherein the at least one power output module is configured to dispatch monitoring data to the control module, the monitoring data comprising a power output module specific identifier and energy consumption data associated to a power output of the power output module; and the control module is configured to individually control each power output module based on the monitoring data and data received from the at least one external device.

In an embodiment, the at least one power output module comprises at least one of a bus connector or a bus slot configured to attach the output module to at least one of the control module or one or more power output modules.

In an embodiment, in addition or alternatively, the power output module comprises at least one sensor configured to detect a device being coupled to the power output of the power output module, a switch configured to control the power output or an energy measuring circuit configured to measure energy consumption of the power output; and the monitoring data comprises information from at least one of the sensor, the electrical switch or the energy measuring circuit.

In an embodiment, in addition or alternatively, the control module comprises a switch configured to control power supply of at least one power output of the power output modules in response to a user input.

In an embodiment, in addition or alternatively, the control module is configured to transmit the monitoring data to the external device; and control the at least one power output module based on data received from the external device in response to the transmitted monitoring data.

In an embodiment, in addition or alternatively, the control unit is configured to receive data on available energy associated to at least one local energy source from the external device; and control the at least one power output module based on the available energy and the energy consumption data of the at least one power output module.

In an embodiment, in addition or alternatively, the control module is configured to receive data associated to at least one sensor; and control the at least one power output module based on the sensor data.

In an embodiment, in addition or alternatively, the control module is configured to predict energy consumption of the at least one power output module based on the energy consumption data; and schedule turning off and/or turning on power output of one or more power outlet modules based on the available energy and the predicted energy consumption.

In an embodiment, in addition or alternatively, the control module is configured to detect at least one of a standby mode of a device coupled to the power output of the power output module or a malfunction of a device coupled to the power output of the power output module based on the energy consumption data; and turn off the power output of the power output module coupled to the device.

In an embodiment, in addition or alternatively, the control module is further configured to notify a user of the detected malfunction of the device coupled to the power output of the power output module.

In an embodiment, in addition or alternatively, the control module is configured to receive an acknowledgement from the user in response to the notification; and turn on the power output of the power output module to restart the device in response to the acknowledgement.

In an embodiment, in addition or alternatively, the control module is configured to receive preset timing information associated with at least one power outlet module; and schedule turning on and/or turning off power output of the at least one power output module based on the preset timing information.

In an embodiment, in addition or alternatively, at least one of the control module or the power output module is configured to be integrated to at least one of an electrical wiring, a main fuse box, a distribution board, a junction box, a socket, an industrial socket, an extension cord, a socket tower, an electrical device, a furniture or a DIN rail.

According to a second aspect, there is provided a system for demand-side management, comprising a local energy system configured to produce electrical energy; at least one apparatus according to the first aspect; and a server configured to receive data indicative of available energy from the local energy system; receive monitoring data associated to energy consumption from the at least one apparatus; determine control instructions for the at least one apparatus to adjust energy consumption based on the available energy; and dispatch the control instructions to the at least one apparatus.

In an embodiment, the server is configured to predict energy consumption and available energy based on the received data within a predetermined interval; and the control instructions comprise scheduling information to adjust the energy consumption to meet the available energy within the predetermined interval.

The above discussed means may be implemented, for example, using at least one processor, at least one processor and at least one memory connected to the at least one processor, or at least one processor, at least one memory connected to the at least one processor and an input/output interface connected to the at least one processor.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**FIG. 1** illustrates an apparatus for monitoring and controlling energy usage according to an embodiment.
**FIG. 2** illustrates an example embodiment of an apparatus comprising a control module and a plurality of power output modules with an outlet according to an embodiment.
**FIG. 3** illustrates an example embodiment of a block diagram of an apparatus comprising a plurality of power output modules according to an embodiment.
**FIG. 4** illustrates an apparatus for monitoring and controlling energy usage in an energy management system according to an embodiment.
**FIG. 5** illustrates a plurality of apparatuses for controlling power output installed in an existing electricity network of a household.

### DETAILED DESCRIPTION

In an embodiment, an apparatus for monitoring and controlling energy consumption is provided. The apparatus comprises a control module and one or more power output modules. The apparatus is modular such that the apparatus may comprise separate modules removably attachable to each other. Each module may perform or fulfill some specified function and may be replaced by a similar module for the same function, independently of the other modules. The number of power output modules connected to the control module may be changed, for example, after the apparatus is installed to a device or a system. The modules may be connected with a bus connection, and the control module may automatically identify each connected power output module through the bus connection. Each power output module may dispatch energy consumption data associated to at least one device coupled with the power output module to the control module. The control module may further receive data from external devices, such as a server, and individually control each power output module based on the energy consumption and external data. In an embodiment, the control module may receive data on available energy, for example, from local renewable energy sources, and control the power output modules to optimize energy consumption based on the available energy. Advantageously, the apparatus may be integrated in existing electricity networks of buildings.

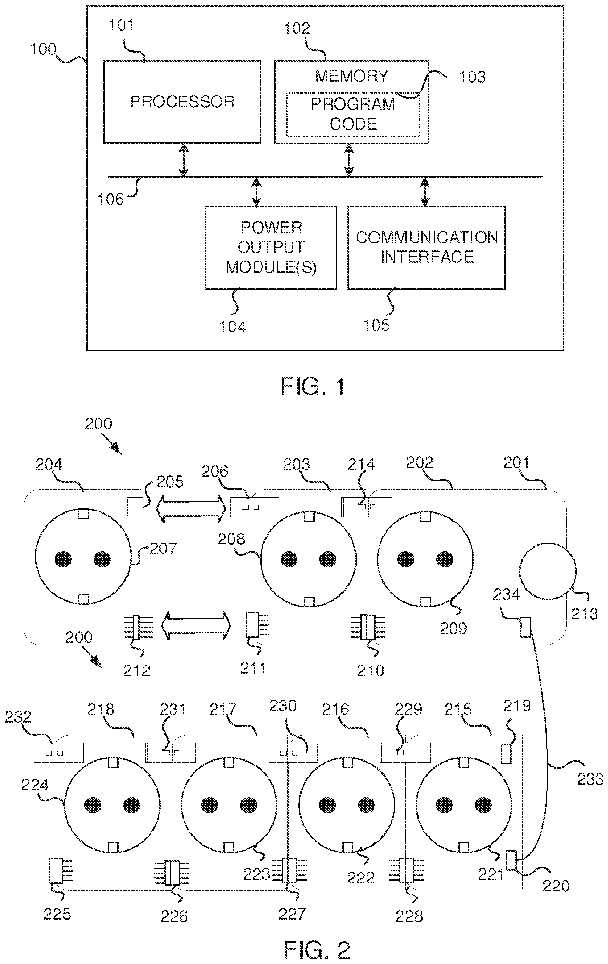

FIG. 1 illustrates an apparatus 100 for monitoring and controlling energy usage according to an embodiment.

The apparatus 100 may comprise at least one processor 101. The at least one processor may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus 100 may further comprise at least one memory 102. The memory 102 may be configured to store, for example, computer program code or the like, for example operating system software and application software. The memory 102 may comprise one or more volatile memory devices, one or more non-volatile memory devices, and/or a combination thereof. For example, the memory may be embodied as magnetic storage devices, optical magnetic storage devices, or semiconductor memories (such as mask ROM, PROM (programmable ROM), EPROM (erasable PROM), flash ROM, RAM (random access memory), etc.).

The apparatus 100 may further comprise a communication interface 105 configured to enable the apparatus 100 to transmit and receive information to/from other systems or devices. The communication interface 105 may be configured to provide at least one wireless radio connection, such as for example a 3GPP mobile broadband connection (e.g. 3G, 4G, 5G). However, the communication interface may be configured to provide one or more other type of connections, for example a wireless local area network (WLAN) connection, a mesh network, a short range wireless network connection such as for example a Bluetooth low energy (BLE), or the like, or a wired Internet connection.

The apparatus 100 may comprise at least one power output module 104. The apparatus 100 may comprise one or more removably attachable power output modules 104. The power output module 104 may be coupled to the apparatus 100 via a bus connection 106. In an embodiment, a plurality of power output modules 104 may be coupled to the apparatus 100 using separate bus connections. The power output modules 104 may be individually removed or attached to the apparatus 100, for example, with a bus connector. In an embodiment, the power output modules 104 may be attached to each other, and one of the power output modules 104 provides connection to the processor and memory of the apparatus 100. The bus 106 may be configured to provide at least one of an alternating current and/or data connection between the processor 101 and the memory 102 and each power output module 104. Each power output module 104 may be identified, monitored and controlled by the processor 101 through the bus 106. In an embodiment, the bus 106 may comprise a plurality of buses connected to each other with the bus connections configured in the power output modules 104.

When the apparatus 100 is configured to implement some functionality, some component and/or components of the apparatus 100, such as for example the at least one processor and/or the memory, may be configured to implement this functionality. Furthermore, when the at least one processor is configured to implement some functionality, this functionality may be implemented using program code 103 comprised, for example, in the memory 102.

The functionality described herein may be performed, at least in part, by one or more computer program product components such as software components. According to an embodiment, the apparatus 100 comprises a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

FIG. 2 illustrates an example embodiment of an apparatus 200 comprising a control module 201 and a plurality of power output modules 202, 203, 204, 215, 216, 217, 218 with an outlet 207, 208, 209, 221, 222, 223, 224 according to an embodiment.

The control module 201 may comprise a controller, a memory and a communications interface configured to enable controlling the plurality of power output modules 202, 203, 204, 215, 215, 217, 218 coupled to the control module 201. The control module 201 may further comprise a power input and a switch 213 configured to switch off power supply from the outlet of at least one of the coupled power output modules. In an embodiment, the apparatus 200 may be integrated to an extension cord, and the switch may be a main switch of the extension cord. In an embodiment, the apparatus 200 may be integrated to an outlet tower, i.e. a power strip tower, or any other device configured to provide power via one or more outlets. The plurality of power output modules 202, 203, 204, 215, 216, 217, 218 may comprise at least one connector 205, 206, 210, 211, 212, 214, 220, 225, 226, 227, 228, 229, 230, 231 configured to couple the power output module at least one of to another power output module or to the control module 201. In an embodiment, the control module 201 may comprise a first power output module 202, and one or more additional power output modules 203, 204 may be coupled to the apparatus 200 via the first output module 202, wherein each power output module 202, 203, 2014 share a primary bus connection. The first power output module 202 may be coupled to the control module 201 through a first bus slot configured in the control module 201 and providing a primary bus connection. The control module 201 may further comprise one or more additional bus slots 234. A second power output module 215 may be coupled to the additional bus slot, for example, using an I2C (inter-integrated circuit) bus flat cable 233 as a secondary bus connection to the control module 201. One or more additional power output modules 216, 217, 218 may be coupled to the apparatus 200 via the second output module 215, wherein each power output module 215, 216, 217, 218 share the secondary bus connection. Each power output module 202, 203, 204, 215, 216, 217, 218 and the control module 201 may comprise individual printed circuit boards. The at least one connector 210, 211, 212, 225, 226, 227, 228, 220 may enable establishing a bus connection to transmit at least one of data and/or power between the control module 201 and the power output module 202, 203, 204, 215, 216, 217, 218. The bus connection may enable controlling, by the control module 201, for example, relays configured in the power output modules 202, 203, 204, 215, 216, 217, 218. The bus connection may enable, for example, receiving data, by the control module 201, on at least one of a sensor or an energy measuring circuit configured in the power output modules 202, 203, 204, 215, 216, 217, 218. In an embodiment, the power output module 202, 203, 204, 215, 216, 217, 218 may comprise an electrical connector 210, 211, 212, 225, 226, 227, 228, 220 such as at least one of a pin header 212, 210, 226, 227, 228 or a header connector 211, 210, 225, 226, 227, 228 mount on a PCB (printed circuit board) of the power output module 202, 203, 204, 215, 216, 217, 218. In general, the power output module 202, 203, 204, 215, 216, 217, 218 may comprise at least one of a bus connector or a bus slot, such as the bus slot 220 configured for flat cable 233. In an embodiment, the power output module 202, 203, 204, 215, 216, 217, 218 may further comprise another connector 205, 206, 214, 229, 230, 231, 232 mount on the PCB attaching the power output module 202, 203, 204 to another power output module 202, 203, 204, 215, 216, 217, 218 or the control module 201. The connector 205, 206, 214, 229, 230, 231, 232 may be configured to transmit AC current between the attached modules 201, 202, 203, 204, 215, 216, 217, 218. In an embodiment, the AC connection may be implemented with coupled electrical wirings instead of connectors. For example, the second power output module 215 may be coupled to another AC connection than the control module 201 via AC connection spot 219. The connectors 205, 206, 210, 211, 212, 214, 219, 220, 229, 230, 231, 232, 225, 226, 227, 228 may enable removably attaching the power output module 202, 203, 204, 215, 216, 217, 218 to one or more other power output modules 202, 203, 204, 215, 216, 217, 218. In addition, the connectors 205, 206, 210, 211, 212, 214, 219, 220, 229, 230, 231, 232, 225, 226, 227, 228 may enable removably attaching the power output module 202, 203, 204, 215, 216, 217, 218 to the control module 201. Each power output module 202, 203, 204, 215, 216, 217, 218 may be provided with a unique identifier. A power output module 202, 203, 204, 215, 216, 217, 218 may be removed from or added to the apparatus 200 at any time, and the control module 201 may identify the coupled power output modules 202, 203, 204, 215, 216, 217, 218 based on the unique identifiers.

The power output modules 202, 203, 204, 215, 216, 217, 218 may be configured to measure energy consumption of a device coupled to the outlet 207, 208, 209, 221, 222, 223, 224 of the power output module 202, 203, 204, 215, 216, 217, 218. Each power output module 202, 203, 204, 215, 216, 217, 218 may be configured to dispatch monitoring data comprising energy consumption data associated with the coupled device to the control module 201. The monitoring data may be associated with the unique identifier and the control module 201 may individually control each power output module 202, 203, 204, 215, 216, 217, 218 based on the identifier. In an embodiment, each power output module 202, 203, 204, 215, 216, 217, 218 may have an address specific to the power output module configured to help the control module 201 distinguish the plurality of power output modules 202, 203, 204, 215, 216, 217, 218 from each other and to control the power output modules 202, 203, 204, 215, 216, 217, 218 through the primary and the secondary bus connection. In addition to the monitoring data, the control module 201 may receive data from external devices via the communication interface. The external device may be a computing device such as a server. The power output modules 202, 203, 204, 215, 216, 217, 218 may comprise switches, such as relays or other electrical switches, configured to turn on/off power supply to the outlets 207, 208, 209, 221, 222, 223, 224 and, respectively, to the coupled devices. In an embodiment, the control module 201 may dispatch the monitoring data to the server and receive control instructions from the server in response to the dispatched monitoring data. The control instructions may comprise instructions to at least one of turn on or turn off power supply in one or more specific power output modules 202, 203, 204, 215, 216, 217, 218. Hence, an adaptable solution for power management with individual control of devices may be provided.

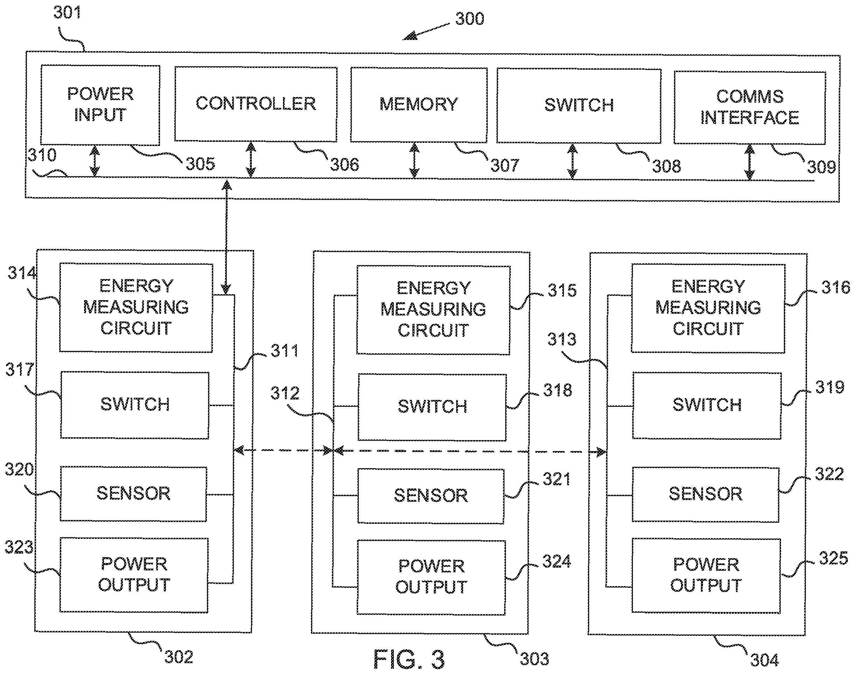

FIG. 3 illustrates an example embodiment of a block diagram of an apparatus 300 comprising a control module 301 and a plurality of power output modules 302, 303, 304 according to an embodiment.

The control module 301 may comprise a controller 306. The controller 306 may be configured to control operation of at least one power output module 302, 303, 304 connected to a same bus 310 with the control module 301. The controller 306 may comprise, for example, one or more processors. The control module 301 may further comprise one or more memories 307 comprising program code which, when executed on the controller 306, causes the control module 301 to perform at least one example embodiment. In an embodiment, the control module 301 may be coupled to a power input 305 and each power output module 302, 303, 304 may comprise power output 323, 324, 325 associated with the power input 305. For example, the control module 301 may be coupled to a power input associated to a device or a component configured to transfer electricity in a building, such as an electrical wiring, an extension cord, a mains fuse box, a junction box, or the like. In an embodiment, the power output 323, 324, 325 may be an outlet, i.e. a socket. In an embodiment, the apparatus 300 may be configured for industrial use, and the outlet may be, for example, an industrial multiphase socket. The control module 301 may comprise a switch 308 configured to control at least one switch 317, 318, 319 associated to the power output 323, 324, 325 of the power output modules 302, 303, 304. The switch 308 may be, for example, a programmable electrical switch. The switch 308 may be programmed, for example, to change a state of the one or more switches 317, 318, 319 in response to a user input. For example, the switch 308 may be implemented as a push switch and the programmed state change may depend on the length of the push by the user. In an embodiment, control of one or more switches 317, 318, 319 by the switch 308 may be disabled such that the respective power output may be always on irrespective of a state of the switch 308. For example, lighting devices may be coupled to the power output modules 303 and 304, and a fridge to the power output module 202. The switch 317 controlling the power output 323 for the fridge may be disabled because it may be desirable for the fridge to be powered at all times and, hence, the change of a state of the switch 308 may only cause switching on or off the lighting.

The control module 301 may comprise a communication interface 309. The control module 301 may be configured to transmit monitoring data received from the power output modules 302, 303, 304 wirelessly to an external computing device via the communication interface 309. In response, the control module 301 may receive control data from the external computing device. The control data may comprise additional data for determining individual control of the power output modules 302, 303, 304. Alternatively, or in addition, the control data may comprise instructions for controlling the power output modules 302, 303, 304. In an embodiment, the control module 301 may receive data from at least one of a server, a user device, one or more sensors or a local energy source system. In an embodiment, the control module 301 may receive data from at least one sensor and control the plurality of power output modules 302, 303, 304 based on the received sensor data. The one or more sensors may be, for example, a sensor indicating a presence of a user in a room or a building, an RFID, a motion sensor, a temperature sensor, or the like.

Each of the plurality of power output modules 302, 303, 304 may comprise an energy measuring circuit 314, 315, 316. The energy measuring circuit 314, 315, 316 may be configured to measure energy consumption of a device coupled to the power output 323, 324, 325 of the power output module 302, 303, 304. If the power output 323, 324, 325 comprises a socket, the energy measuring circuit 314, 315, 316 may measure energy consumption of a device plugged in to the socket. In an embodiment, the power output module 302, 303, 304 may comprise a sensor 320, 321, 322 configured to detect a device being connected to the power output 323, 324, 325. The monitoring data may comprise a state of the sensor indicating whether a device is being coupled to the power output 323, 324, 325 of the power output module. Each power output module 302, 303, 304 may comprise the switch 317, 318, 319, which may be an electrical switch. The switch 317, 318, 319 may be configured to switch off the power output 323, 324, 325 in response to a command from the control unit 301 such that electricity supply to the device coupled to the respective power output 323, 324, 325 may be stopped. In an embodiment, the power output modules 302, 303, 304 may comprise a bus 311, 312, 313 and they may be coupled to each other via a bus connection. The control module 301 may control each power output module 302, 303, 304 via the buses 310, 311, 312, 313 coupled to each other. The power output modules 302, 303, 304 may be removably attachable to at least one of the control module 301 or one or more power output modules 302, 303, 304 with the bus connections. Hence, the number of power output modules in the apparatus 300 may be changed.

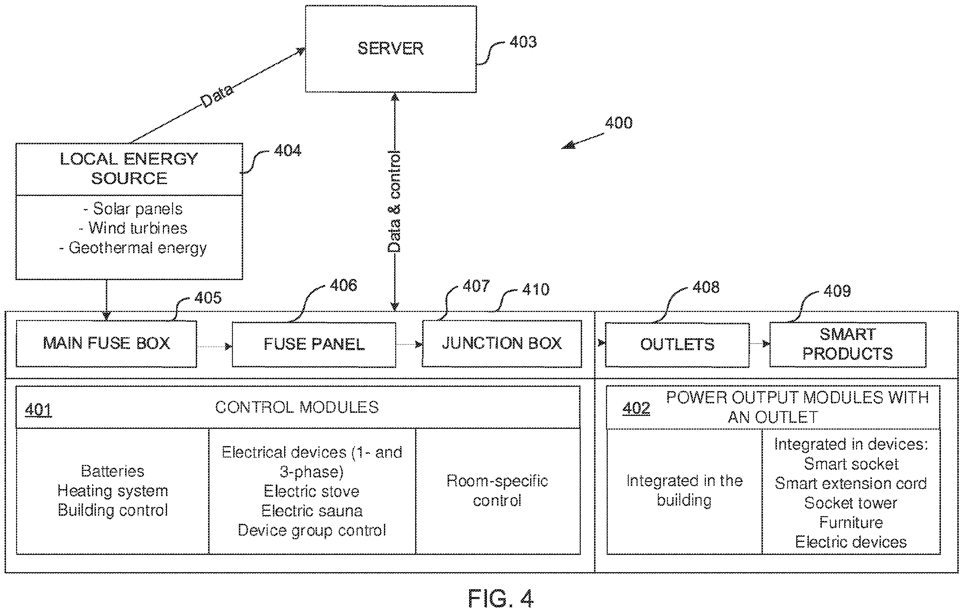

FIG. 4 illustrates an apparatus for monitoring and controlling energy usage in an energy management system 400 according to an embodiment. The energy management system 400 may be configured, for example, in a building with an off-grid energy system. The apparatus may comprise a control module 401 and one or more power output modules 402 which may be adapted to be integrated in existing infrastructure of the building's electrical system. Alternatively, the one or more apparatuses may be integrated in the electrical system while it is being installed. Modules of the apparatus may be combined or interchanged with others like it to create different designs or groupings to control energy usage.

The building may comprise one or more local energy sources 404, such as solar panels, one or more wind turbines, geothermal energy system, or the like. The one or more local energy sources 404 may be configured to provide energy for the building's electricity network 410. The one or more local energy sources 404 may be electrically coupled to a main fuse box 405 of the building. The one or more local energy sources 404 may be further communicatively coupled to a server 403. The server 403 may receive data on energy produced by the local energy sources 404. The data may be received by the server 403 in real-time or at predetermined intervals. Based on the data received from the local energy sources 404, the server 403 may determine an amount of available energy for use by devices coupled to the power output modules 402 in the building.

The server 403 may communicate with the one or more apparatuses to optimize energy consumption of devices coupled to the power output modules 402 based on the available energy. In an embodiment, electricity to each device in the building may be fed by the power output modules and, hence, the devices and their consumption in the network may be known by the server 403. The server 403 may continuously analyze data received from the local energy sources 404 and the apparatuses such that energy demand may be adjusted according to, for example, state of energy storages and energy production of the building. In an embodiment, the server 403 may utilize artificial intelligence (AI) to make prediction about the future energy supply and demand. The AI may be trained with previously received data to estimate energy production of the local energy sources 403 at different times of the day and/or seasons. In addition, the AI may utilize weather forecasts in the predictions when the local energy sources are weather dependent. For example, the server may determine based on the weather forecasts that the local energy production is likely to decrease and instruct the control modules to switch off power from all devices which have been in little use in order to save stored energy. Also, predictions about energy demand may be made by the server 403 based on energy consumption data received from the apparatuses. The server 403 may know, based on the energy consumption data, the amount of energy consumption of different devices coupled to the power output modules 402 as well as their usual usage times. Further, the AI may predict possible changes in the demand, for example, based on the weather forecast and other data which may indicate changes in behavior of usage of the devices. Based on the energy consumption data, the server 403 may detect devices which may be on a stand-by state and instruct the apparatuses to turn off power from those devices. Further, sudden changes in energy consumption of specific devices may indicate, for example, a malfunction of the device or a power outage in the building. The server 403 may continuously analyze the data to detect such indications that imply a device may be turned off or turned on. Because energy consumption of each device may be known to the server 403, the server 403 may perform demand-side management to accurately match the available energy and the energy demand of the building both in short and long term. In an embodiment, the server 403 may be configured to predict energy consumption and available energy based on the received data within a predetermined interval, and dispatch control instructions to the apparatuses comprising scheduling information to adjust the energy consumption to meet the available energy within the predetermined interval.

The electrical power entering the building from the local energy sources 404 via the main fuse box 405 may be divided up into different subsidiary circuits to be directed around the building with one or more fuse panels 406 coupled to the main fuse box 405. The main fuse box 405 may be further coupled with, for example, battery storages storing the produced energy, a heating system of the building and a building control. The fuse panel 406, also known as a distribution board or a fuse box, may be the central hub of the building's electrical network where the incoming electricity is separated into various circuits for feeding appliances and devices. The fuse panel 406 may be coupled to one or more junction boxes 407 which may be configured to further divide up the subsidiary circuits, for example, for a plurality of outlets 408. The outlets 408 may provide electrical power to devices, such as smart products 409.

In an embodiment, the control module 401 may be coupled to at least one of the main fuse box 405, the fuse panel 406 or the junction box 407. In addition, one or more power output modules 402 may be removably coupled to a bus of the control module. In an embodiment, the control module 401 may comprise one power output module 402, and one or more additional power output modules 402 may be removably attached to at least one of the control module 401 or the power output module 402. In an embodiment, the control module 401 may be coupled to the fuse panel 406 and the power output modules 402 may be coupled to a plurality of power outputs feeding power to different parts of the building from the fuse panel 406. In an embodiment, the control module 401 may individually control, for example, individual appliances coupled in 1- or 3-phase output, such as an electric stove or an electric sauna, or a group of devices behind the same fuse and coupled to the power output module 402. In an embodiment, the control module 401 may be coupled to the junction box 407. One or more the power output modules 402 may be coupled to one or more branches connected in the junction box 407 such that the control module 401 may perform, for example, room-specific control by controlling various devices coupled to the power output modules 402 associated with the junction box 407. The number of output modules 402 coupled to the control module 401 may be changed. For example, if additional sockets are needed, a new power output module 402 with a socket may be installed in a desired location and coupled to the bus of a nearest control module 401. The new power output module 402 may be automatically identified by the control module 401 through the bus, for example, based on a unique identifier such as an address information.

In an embodiment, the power output module 402 may comprise an outlet. The power output modules 402 comprising the outlet may be used, for example, to replace the traditional sockets installed in the building. In an embodiment, one or more power output modules 402 with the outlets, such as sockets, may be integrated in devices to form smart products, such as individual smart sockets, smart extension cords or smart socket towers with a plurality of individually controllable outlets. In an embodiment, the power output module 402 with the outlet may be integrated to a furniture, such as a kitchen or an office furniture.

Energy consumption of different devices coupled to the devices or furniture with the power outlet modules 402 with or without outlet may be monitored and controlled by the control module 401. In an embodiment, each power output module 402 may dispatch energy consumption data associated to a device coupled to the power output module 402 to the control module 401. The control module 401 may dispatch the received monitoring data to the server 403. The server 403 may analyze the monitoring data received from one or more control modules and data from the local energy source 404 indicating the amount of available energy. The server may dispatch control data to the one or more control modules 401 to optimize energy usage of the building based on the available energy. The control data may comprise instructions to turn off or turn on power output of one or more power output modules 402. The instructions may be for real-time control and/or comprise scheduling information. Alternatively, or in addition, the control module 401 may receive data on available energy from the server 403 and determine the control of the coupled power output modules 402 based on the received data and the monitoring data stored on the control module 401 to optimize energy usage. The data on available energy may comprise real-time data, or available energy on a predetermined interval. In an embodiment, the available energy may be expressed on an hourly basis.

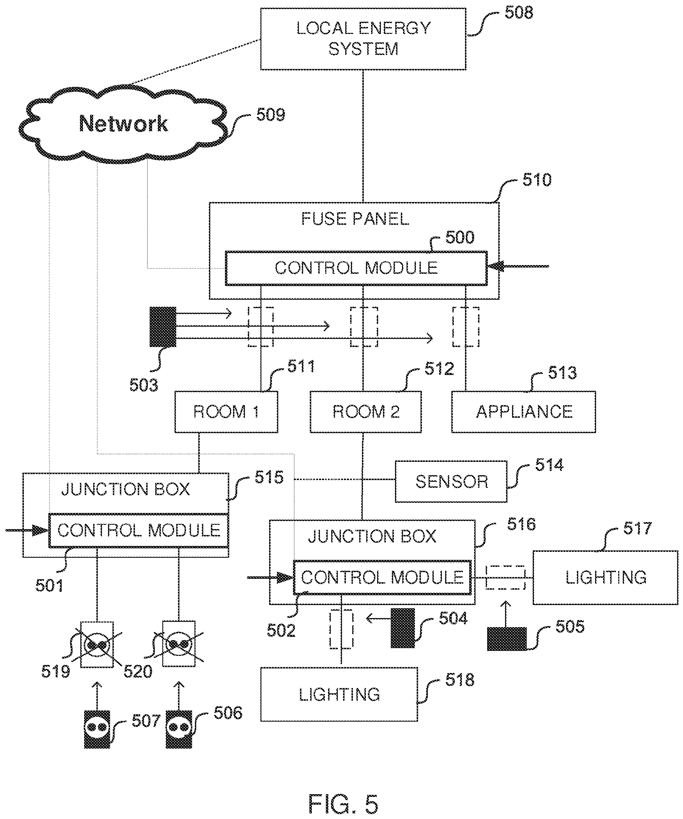

FIG. 5 illustrates a plurality of apparatuses for controlling power output, wherein the apparatuses are installed in an existing electricity network of a household. The apparatuses may be installable in existing sites, and hence, there may not be a need to rebuild the household electrification in order to bring the apparatuses into use. In addition, due to the modularity, the number of the power output modules connected to the control module may be increased and decreased according to a need. The modularity of the apparatuses may enable easy construction and flexible arrangement of the control and power output modules. The modules of the apparatuses may be altered or replaced without affecting the remainder of the apparatus.

The household may have a local energy system 508 providing self-produced energy for use by the household. The local energy system 508 may comprise an energy storage, such as batteries, for storing the produced energy. The local energy system 508 may communicate with a server over a network 509 to dispatch information on available energy to be analyzed by the server. The electrical energy supplied by the local energy system 508 may be distributed by a fuse panel 510. The fuse panel 510 may divide the entering electricity, for example, to a first room 511, a second room 512 and a high consumption appliance 513, such as a dishwasher. The electricity network may comprise distribution points for the rooms 511, 512, such as junction boxes 515, 516, configured to direct power to lighting devices 517, 518 and additional sockets 519, 520.

In an embodiment, a control module 500 may be integrated into the fuse panel 510. The control module 500 may be installed, for example, behind a fuse or a circuit breaker of the fuse panel 510. In an embodiment, the control module 500 may be configured to be coupled to a DIN-rail. The control module 501 may be coupled to the wirings of the fuse panel 510, for example, using screw terminals. In addition, one or more power output modules 503 may be installed, for example, to individual or shared wirings inside or outside the fuse box feeding power to the subsidiary circuits. In an embodiment, the control unit 500 may comprise one power output module. Each power output module 503 may comprise an electrical switch configured to turn on and turn off power output from the power output module 503 according to commands from the control unit 500. The one or more power output modules 503 may be coupled to the control module 500 with a bus connection configured to provide at least one of a data or alternating current connection between the control module 500 and the one or more power output modules 503. Hence, power feed from the one or more subsidiary circuits may be monitored and controlled by the control module 500. In an embodiment, the control module 500 may receive information from a fire alarm system, and power feed to the household via the one or more power output modules 503 may be shut down by the control module 500 in case of a fire.

In an embodiment, control modules 501, 502 may be integrated to junction boxes 515, 516. The first junction box 515 may be configured to divide electricity for two outlets 519, 520. In an embodiment, the traditional outlets may be replaced with power output modules 507, 506 comprising an outlet. The power output modules 507, 506 may be coupled to the control module 501 integrated in the junction box 515 to enable individually controllable outlets. The second junction box 516 may be configured to divide supplied electricity for two lighting devices 517, 518. Power output modules 504, 505 may be installed, for example, to one or more terminals of the junction box 516 such that the control module 502 installed, for example, to an input wiring of the junction box 516 may individually monitor and control power feed to the lighting devices 517, 518 via the power output modules 504, 505. When the lighting devices are plug-in lights, the power output modules 504, 505 may comprise an outlet as the power output. In an embodiment, the control module 502 and the power output modules 504, 505 may be coupled to a DIN-rail in an installation trunking of the ceiling.

Each control module 500, 501, 502 may be wirelessly coupled to the server over the network 509. The server may receive information on available local energy, such as a charge level of the batteries and/or a state of energy production. The server may further receive monitoring data from each control module 500, 501, 502 comprising energy consumption data of devices connected to the power output modules 503, 504, 505, 506, 507. The server may analyze the data to determine control of the power output modules 503, 504, 505, 506, for example, to match the total energy consumption in relation to the available local energy. In an embodiment, the server may learn habits of the residents in respect to usage of the devices based on the energy consumption data and use the information in making the control determinations. The server may further receive data from other resources, such as user data, weather forecasts or sensor data, to optimize the energy usage. The server may receive instructions from a user comprising, for example, timing information to turn off power from specific devices for a predetermined time, such as for a weekend. In an embodiment, there may be a sensor 514, such as a motion detector, indicating a presence of residents of the household in a room. The sensor 514 may be configured to dispatch data to at least one of the server or the control module 500 over the network 509. The control module 500 may turn on and off one or more devices 517, 518 based on the sensor data. In an embodiment, the control module 500 may receive instructions from the server to switch on or off power supply to a device group 517, 518 associated with the second room 512 based on the sensor data. In an embodiment, the control may be determined based on the available local energy such that the server may determine an order for turning off specific power outputs, for example, based on their energy consumption and utilization rate such that the number of devices to be turned off may be increased in response to a decreasing amount of available energy, and vice versa. In an embodiment, the user may determine the order, for example, by selecting devices which must be on at all times.

In an embodiment, the control module 502, 501 may detect at least one of a standby mode of a device coupled to the power output of the power output module or a malfunction of a device coupled to the power output of the power output module based on the energy consumption data. For example, the control module 502 may detect a burned-out lamp associated with the lighting device 518 based on changes in energy consumption data associated with the power output module 504. Similarly, based on the energy consumption data, the control module 501 may detect that a television plugged in to the outlet of the power output module 507 is in a stand-by mode and turn off the power supply from the power output module 507. Also, if a malfunction of a device, such as the television, is detected based on the energy consumption data, the power feed may be turned off and back on to restart the device in case of a temporary malfunction. In an embodiment, at least one of the server or the control module 501, 502 may detect, based on the energy consumption data, unusually high consumption of a device which may indicate, for example, a component failure or wear of the device. The server or the control module 501, 502 may analyze the energy consumption data to identify changes in behavior of the device which may be an indication of malfunctioning. The control module 501, 502 may be configured to turn off the power output associated to the detected malfunction for safety. In an embodiment, the control module 501, 502 may turn off power output from a plurality of power output modules in response to the detected malfunction of one device. For example, if the malfunction was detected in a factory instead of a household, shutting down one machine may require shutting down also other machines of a product line. In an embodiment, a notification about the detected malfunction may be sent to the user by the control unit or the server via the network 509. The notification may comprise a suggestion, for example, to replace a component of the device, to order maintenance or to restart the device. In an embodiment, the user may send an acknowledgement of the notification to the server or the control module 501, 502. In response to the acknowledgement, the control module 501, 502 may restart the device which was shut down in response to the detected malfunction. For example, the notification may be sent to a maintenance company and an operator of the maintenance company may remotely restart the devices by responding with the acknowledgement. In an embodiment, the control module 501 may determine, for example based on the sensor data received from the server, that the building is empty and hence room temperature may be lowered and/or power may be turned off from one or more outlets. For example, the control module 501 or the server may know, or detect based on the energy consumption data, that an electric heater is coupled to a power outlet module and turn off the power supply to the heater for a predetermined time to lower the room temperature while the apartment is empty.

In an embodiment, the control module 500, 501, 502 may predict energy consumption of the one or more power output modules 503, 505, 506, 507 based on energy consumption data received within a certain time interval. Alternatively, the predictions may be performed by the server in response to the received monitoring data. The control module 500, 501, 502 may control the one or more power output modules 503, 505, 506, 507 based on scheduled turning off/on times. Turning on and off the devices coupled to the power output modules 503, 504, 505, 506, 507 may be scheduled based on the predicted energy consumptions to save energy, for example, when the device coupled with the power output module 503, 505, 506, 507 is usually not used. In an embodiment, the turn on and off times may be scheduled based on available energy from the local energy system 508 such that energy usage may be optimized based on usual usage times of the devices. In an embodiment, turning on and off the devices may be determined such that consumption on peak load hours may be shifted to other times and, hence, ensure availability of sufficient amount of energy to meet the demand at all times. In an embodiment, the control module 500, 501, 502 may control the power output module 503, 505, 506, 507 based on a preset amount of allowed energy consumption. In an embodiment, the control module 500, 501, 502 may receive instructions from the server to turn off power output in response to the energy consumption data exceeding a predetermined threshold.

The example embodiments described may enable optimizing electricity consumption by knowing the amount of available energy, devices in the network and their consumption when on. Further, the devices may be individually monitored and turned on/off to match demand with available electricity.

The exemplary embodiments and aspects of the invention can be included within any suitable device, for example, including, servers, workstations, capable of performing the processes of the exemplary embodiments. The exemplary embodiments may also store information relating to various processes described herein.

Example embodiments may be implemented in software, hardware, application logic or a combination of software, hardware and application logic. The example embodiments can store information relating to various methods described herein. This information can be stored in one or more memories, such as a hard disk, optical disk, magneto-optical disk, RAM, and the like. One or more databases can store the information used to implement the example embodiments. The databases can be organized using data structures (e.g., records, tables, arrays, fields, graphs, trees, lists, and the like) included in one or more memories or storage devices listed herein. The methods described with respect to the example embodiments can include appropriate data structures for storing data collected and/or generated by the methods of the devices and subsystems of the example embodiments in one or more databases.

All or a portion of the example embodiments can be conveniently implemented using one or more general purpose processors, microprocessors, digital signal processors, micro-controllers, and the like, programmed according to the teachings of the example embodiments, as will be appreciated by those skilled in the computer and/or software art(s). Appropriate software can be readily prepared by programmers of ordinary skill based on the teachings of the example embodiments, as will be appreciated by those skilled in the software art. In addition, the example embodiments can be implemented by the preparation of application-specific integrated circuits or by interconnecting an appropriate network of conventional component circuits, as will be appreciated by those skilled in the electrical art(s). Thus, the examples are not limited to any specific combination of hardware and/or software. Stored on any one or on a combination of computer readable media, the examples can include software for controlling the components of the example embodiments, for driving the components of the example embodiments, for enabling the components of the example embodiments to interact with a human user, and the like. Such computer readable media further can include a computer program for performing all or a portion (if processing is distributed) of the processing performed in implementing the example embodiments. Computer code devices of the examples may include any suitable interpretable or executable code mechanism, including but not limited to scripts, interpretable programs, dynamic link libraries (DLLs), Java classes and applets, complete executable programs, and the like.

As stated above, the components of the example embodiments may include computer readable medium or memories for holding instructions programmed according to the teachings and for holding data structures, tables, records, and/or other data described herein. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer. A computer-readable medium may include a computer-readable storage medium that may be any media or means that can contain or store the instructions for use by or in connection with an instruction execution system, apparatus, or device, such as a computer. A computer readable medium can include any suitable medium that participates in providing instructions to a processor for execution. Such a medium can take many forms, including but not limited to, non-volatile media, volatile media, transmission media, and the like.

## Claims

1. An apparatus (100, 200, 300), comprising:
a control module (201, 301, 401, 500) comprising a communication interface (105, 302, 303, 304, 402, 503) configured to transmit and receive data to/from at least one external device (403) and at least one bus slot configured to receive a power output module (105, 202, 203, 204, 215, 216, 217, 218, 302, 303, 304, 402, 503);
at least one power output module (105, 202, 203, 204, 215, 216, 217, 218, 302, 303, 304, 402, 503) removably attachable to at least one of the control module (201, 301, 401, 500) and one or more power output modules (105, 202, 203, 204, 215, 216, 217, 218, 302, 303, 304, 402, 503) with a bus connection; and
at least one bus configured to provide a data connection between the control module (201, 301, 401, 500) and the at least one power output module (105, 202, 203, 204, 215, 216, 217, 218, 302, 303, 304, 402, 503);
wherein the at least one power output module (105, 202, 203, 204, 215, 216, 217, 218, 302, 303, 304, 402, 503) is configured to dispatch monitoring data to the control module (201, 301, 401, 500) via the bus connection, the monitoring data comprising a power output module specific identifier and energy consumption data associated to a power output of the power output module (105, 202, 203, 204, 215, 216, 217, 218, 302, 303, 304, 402, 503); , **characterized by**
the control module (201, 301, 401, 500) is configured to individually control each power output module (105, 202, 203, 204, 215, 216, 217, 218, 302, 303, 304, 402, 503) based on the monitoring data and data received from the at least one external device (403) ;
the at least one power output module (105, 202, 203, 204, 215, 216, 217, 218, 302, 303, 304, 402, 503) comprises at least one of a bus connector or a bus slot configured to removably attach the power output module (105, 202, 203, 204, 215, 216, 217, 218, 302, 303, 304, 402, 503) to at least one of the control module (201, 301, 401, 500) or one or more power output modules (105, 202, 203, 204, 215, 216, 217, 218, 302, 303, 304, 402, 503); and
wherein the bus connector or bus slot is configured to connect the modules so that the control module (201, 301, 401, 500) is configured to individually control each power output module.

2. The apparatus (100, 200, 300) of claim 1, wherein the power output module (105, 202, 203, 204, 215, 216, 217, 218, 302, 303, 304, 402, 503) comprises at least one sensor configured to detect a device being coupled to the power output of the power output module (105, 202, 203, 204, 215, 216, 217, 218, 302, 303, 304, 402, 503), a switch configured to control the power output or an energy measuring circuit configured to measure energy consumption of the power output; and
the monitoring data comprises information from at least one of the sensor, the electrical switch or the energy measuring circuit.

3. The apparatus (100, 200, 300) of any preceding claim, wherein the control module (201, 301, 401, 500) comprises a switch configured to control power supply of at least one power output of the power output modules (105, 202, 203, 204, 215, 216, 217, 218, 302, 303, 304, 402, 503) in response to a user input.

4. The apparatus (100, 200, 300) of any preceding claim, wherein the control module (201, 301, 401, 500) is configured to:
transmit the monitoring data to the external device (403); and
control the at least one power output module (105, 202, 203, 204, 215, 216, 217, 218, 302, 303, 304, 402, 503) based on data received from the external device (403) in response to the transmitted monitoring data.

5. The apparatus (100, 200, 300) of any preceding claim, wherein the control module (201, 301, 401, 500) is configured to:
receive data on available energy associated to at least one local energy source (404) from the external device (403); and
control the at least one power output module (105, 202, 203, 204, 215, 216, 217, 218, 302, 303, 304, 402, 503) based on the available energy and the energy consumption data of the at least one power output module (105, 202, 203, 204, 215, 216, 217, 218, 302, 303, 304, 402, 503).

6. The apparatus (100, 200, 300) of any preceding claim, wherein the control module (201, 301, 401, 500) is configured to receive data associated to at least one sensor; and
control the at least one power output module (105, 202, 203, 204, 215, 216, 217, 218, 302, 303, 304, 402, 503) based on the sensor data.

7. The apparatus (100, 200, 300) of claim 6, wherein the control module (201, 301, 401, 500) is configured to:
predict energy consumption of the at least one power output module (105, 202, 203, 204, 215, 216, 217, 218, 302, 303, 304, 402, 503) based on the energy consumption data; and
schedule turning off and/or turning on power output of one or more power outlet modules (105, 202, 203, 204, 215, 216, 217, 218, 302, 303, 304, 402, 503) based on the available energy and the predicted energy consumption.

8. The apparatus (100, 200, 300) of any preceding claim, wherein the control module (201, 301, 401, 500) is configured to:
detect at least one of a standby mode of a device coupled to the power output of the power output module (105, 202, 203, 204, 215, 216, 217, 218, 302, 303, 304, 402, 503) or a malfunction of a device coupled to the power output of the power output module (105, 202, 203, 204, 215, 216, 217, 218, 302, 303, 304, 402, 503) based on the energy consumption data; and
turn off the power output of the power output module (105, 202, 203, 204, 215, 216, 217, 218, 302, 303, 304, 402, 503) coupled to the device.

9. The apparatus (100, 200, 300) of claim 8, wherein the control module (201, 301, 401, 500) is further configured to notify a user of the detected malfunction of the device coupled to the power output of the power output module (105, 202, 203, 204, 215, 216, 217, 218, 302, 303, 304, 402, 503).

10. The apparatus (100, 200, 300) of claim 9, wherein the control module (201, 301, 401, 500) is configured to receive an acknowledgment from the user in response to the notification; and
turn on the power output of the power output module (105, 202, 203, 204, 215, 216, 217, 218, 302, 303, 304, 402, 503) to restart the device in response to the acknowledgement.

11. The apparatus of any preceding claim, wherein the control module (201, 301, 401, 500) is configured to:
receive preset timing information associated with at least one power outlet module (105, 202, 203, 204, 215, 216, 217, 218, 302, 303, 304, 402, 503); and
schedule turning on and/or turning off power output of the at least one power output module (105, 202, 203, 204, 215, 216, 217, 218, 302, 303, 304, 402, 503) based on the preset timing information.

12. The apparatus (100, 200, 300) of any preceding claim, wherein at least one of the control module (201, 301, 401, 500) or the power output module (105, 202, 203, 204, 215, 216, 217, 218, 302, 303, 304, 402, 503) is configured to be integrated to at least one of an electrical wiring, a main fuse box, a distribution board, a junction box, a socket, an industrial socket, an extension cord, a socket tower, an electrical device, a furniture or a DIN rail.

13. A system (400) for demand-side management, comprising:
a local energy system (404) configured to produce electrical energy;
at least one apparatus (100, 200, 300) according to any of claims 1 to 12; and
a server (403) configured to:
receive data indicative of available energy from the local energy system (404);
receive monitoring data associated to energy consumption from the at least one apparatus (100, 200, 300) ;
determine control instructions for the at least one apparatus (100, 200, 300) to adjust energy consumption based on the available energy; and
dispatch the control instructions to the at least one apparatus (100, 200, 300).

14. The system (400) of claim 13, wherein the server (403) is configured to predict energy consumption and available energy based on the received data within a predetermined interval; and
the control instructions comprise scheduling information to adjust the energy consumption to meet the available energy within the predetermined interval.

## Patentansprüche

1. Eine Vorrichtung (100, 200, 300), die Folgendes umfasst:
ein Steuermodul (201, 301, 401, 500), das eine Kommunikationsschnittstelle (105, 302, 303, 304, 402, 503), die so konfiguriert ist, dass sie Daten zu/von mindestens einem externen Gerät (403) sendet und empfängt, und mindestens einen Bussteckplatz umfasst, der so konfiguriert ist, dass er ein Leistungsausgangsmodul (105, 202, 203, 204, 215, 216, 217, 218, 302, 303, 304, 402, 503) aufnimmt;
mindestens ein Leistungsausgangsmodul (105, 202, 203, 204, 215, 216, 217, 218, 302, 303, 304, 402, 503), das abnehmbar an mindestens einem der Steuermodule (201, 301, 401, 500) und einem oder mehreren Leistungsausgangsmodulen (105, 202, 203, 204, 215, 216, 217, 218, 302, 303, 304, 402, 503) mit einer Busverbindung befestigt werden kann; und
mindestens einen Bus, der so konfiguriert ist, dass er eine Datenverbindung zwischen dem Steuermodul (201, 301, 401, 500) und dem mindestens einen Leistungsausgangsmodul (105, 202, 203, 204, 215, 216, 217, 218, 302, 303, 304, 402, 503) herstellt;
wobei das mindestens eine Leistungsausgangsmodul (105, 202, 203, 204, 215, 216, 217, 218, 302, 303, 304, 402, 503) so konfiguriert ist, dass es Überwachungsdaten über die Busverbindung an das Steuermodul (201, 301, 401, 500) sendet, wobei die Überwachungsdaten eine Leistungsausgangsmodulspezifische Kennung und Energieverbrauchsdaten umfassen, die einer Leistungsabgabe des Leistungsausgangsmoduls (105, 202, 203, 204, 215, 216, 217, 218, 302, 303, 304, 402, 503) zugeordnet sind; **gekennzeichnet durch**
das Steuermodul (201, 301, 401, 500) so konfiguriert ist, dass es jedes Leistungsausgangsmodul (105, 202, 203, 204, 215, 216, 217, 218, 302, 303, 304, 402, 503) auf der Grundlage der Überwachungsdaten und der von der mindestens einen externen Vorrichtung (403) empfangenen Daten einzeln steuert;
das mindestens eine Leistungsausgangsmodul (105, 202, 203, 204, 215, 216, 217, 218, 302, 303, 304, 402, 503) mindestens einen Busverbinder oder einen Bussteckplatz umfasst, der konfiguriert ist, um das Leistungsausgangsmodul (105, 202, 203, 204, 215, 216, 217, 218, 302, 303, 304, 402, 503) mit mindestens einem der Steuermodule (201, 301, 401, 500) oder einem oder mehreren Leistungsausgangsmodulen (105, 202, 203, 204, 215, 216, 217, 218, 302, 303, 304, 402, 503) zu verbinden; und
wobei der Busverbinder oder Bussteckplatz so konfiguriert ist, dass er die Module verbindet, so dass das Steuermodul (201, 301, 401, 500) so konfiguriert ist, dass es jedes Leistungsausgangsmodul einzeln steuert.

2. Die Vorrichtung (100, 200, 300) nach Anspruch 1, wobei das Leistungsausgangsmodul (105, 202, 203, 204, 215, 216, 217, 218, 302, 303, 304, 402, 503) mindestens einen Sensor, der so konfiguriert ist, dass er eine mit dem Leistungsausgang des Leistungsausgangsmoduls (105, 202, 203, 204, 215, 216, 217, 218, 302, 303, 304, 402, 503) gekoppelte Vorrichtung erfasst, einen Schalter, der so konfiguriert ist, dass er den Leistungsausgang steuert, oder eine Energiemessschaltung umfasst, die so konfiguriert ist, dass sie den Energieverbrauch des Leistungsausgangs misst; und
die Überwachungsdaten Informationen von mindestens einem Sensor, dem elektrischen Schalter oder de Energiemessschaltung umfassen.

3. Die Vorrichtung (100, 200, 300) nach einem der vorhergehenden Ansprüche, wobei das Steuermodul (201, 301, 401, 500) einen Schalter umfasst, der so konfiguriert ist, dass er die Stromversorgung mindestens eines Leistungsausgangs der Leistungsausgangsmodule (105, 202, 203, 204, 215, 216, 217, 218, 302, 303, 304, 402, 503) in Reaktion auf eine Benutzereingabe steuert.

4. Die Vorrichtung (100, 200, 300) nach einem der vorhergehenden Ansprüche, wobei das Steuermodul (201, 301, 401, 500) so konfiguriert ist, dass es:
die Überwachungsdaten an die externe Vorrichtung (403) übermittelt; und
das mindestens eine Leistungsausgangsmodul (105, 202, 203, 204, 215, 216, 217, 218, 302, 303, 304, 402, 503) auf der Grundlage von Daten, die von der externen Vorrichtung (403) als Reaktion auf die übertragenen Überwachungsdaten empfangen wurden.

5. Die Vorrichtung (100, 200, 300) nach einem der vorhergehenden Ansprüche, wobei das Steuermodul (201, 301, 401, 500) so konfiguriert ist, dass es:
Daten über verfügbare Energie, die mit mindestens einer lokalen Energiequelle (404) verbunden ist, von der externen Vorrichtung (403) empfängt; und
das mindestens eine Leistungsausgangsmodul (105, 202, 203, 204, 215, 216, 217, 218, 302, 303, 304, 402, 503) auf der Grundlage der verfügbaren Energie und der Energieverbrauchsdaten des mindestens einen Leistungsausgangsmoduls (105, 202, 203, 204, 215, 216, 217, 218, 302, 303, 304, 402, 503) steuert.

6. Die Vorrichtung (100, 200, 300) nach einem der vorhergehenden Ansprüche, wobei das Steuermodul (201, 301, 401, 500) so konfiguriert ist, dass es Daten empfängt, die mit mindestens einem Sensor verbunden sind; und
das mindestens eine Leistungsausgangsmodul (105, 202, 203, 204, 215, 216, 217, 218, 302, 303, 304, 402, 503) auf der Grundlage der Sensordaten steuert.

7. Die Vorrichtung (100, 200, 300) nach Anspruch 6, wobei das Steuermodul (201, 301, 401, 500) so konfiguriert ist, dass es:
den Energieverbrauch des mindestens einen Leistungsausgangsmoduls (105, 202, 203, 204, 215, 216, 217, 218, 302, 303, 304, 402, 503) auf der Grundlage der Energieverbrauchsdaten vorhersagt; und
das Ausschalten und/oder Einschalten der Leistungsabgabe eines oder mehrerer Steckdosenmodule (105, 202, 203, 204, 215, 216, 217, 218, 302, 303, 304, 402, 503) auf der Grundlage der verfügbaren Energie und des vorhergesagten Energieverbrauchs plant bzw. steuert.

8. Die Vorrichtung (100, 200, 300) nach einem der vorhergehenden Ansprüche, wobei das Steuermodul (201, 301, 401, 500) so konfiguriert ist, dass es:
auf der Grundlage der Energieverbrauchsdaten mindestens einen Standby-Modus einer mit dem Leistungsausgang des Leistungsausgangsmoduls (105, 202, 203, 204, 215, 216, 217, 218, 302, 303, 304, 402, 503) gekoppelten Vorrichtung oder eine Fehlfunktion einer mit dem Leistungsausgang des Leistungsausgangsmoduls (105, 202, 203, 204, 215, 216, 217, 218, 302, 303, 304, 402, 503) gekoppelten Vorrichtung erkennt; und
den Stromausgang des mit der Vorrichtung gekoppelten Stromausgangsmoduls (105, 202, 203, 204, 215, 216, 217, 218, 302, 303, 304, 402, 503) ausschaltet.

9. Die Vorrichtung (100, 200, 300) nach Anspruch 8, wobei das Steuermodul (201, 301, 401, 500) ferner so konfiguriert ist, dass es einen Benutzer über die festgestellte Fehlfunktion der mit dem Leistungsausgang des Leistungsausgangsmoduls (105, 202, 203, 204, 215, 216, 217, 218, 302, 303, 304, 402, 503) gekoppelten Vorrichtung informiert.

10. Die Vorrichtung (100, 200, 300) nach Anspruch 9, wobei das Steuermodul (201, 301, 401, 500) so konfiguriert ist, dass es als Reaktion auf die Benachrichtigung eine Bestätigung von dem Benutzer empfängt; und
den Stromausgang des Stromausgangsmoduls (105, 202, 203, 204, 215, 216, 217, 218, 302, 303, 304, 402, 503) einschaltet, um die Vorrichtung als Reaktion auf die Bestätigung neu zu starten.

11. Die Vorrichtung nach einem der vorhergehenden Ansprüche, wobei das Steuermodul (201, 301, 401, 500) so konfiguriert ist, dass es:
voreingestellte Zeitinformationen empfängt, die mit mindestens einem Leistungsausgabemodul (105, 202, 203, 204, 215, 216, 217, 218, 302, 303, 304, 402, 503) verbunden sind; und
Planen des Ein- und/oder Ausschaltens der Leistungsabgabe des mindestens einen Leistungsausgangsmoduls (105, 202, 203, 204, 215, 216, 217, 218, 302, 303, 304, 402, 503) auf der Grundlage der voreingestellten Zeitinformationen.

12. Die Vorrichtung (100, 200, 300) nach einem der vorhergehenden Ansprüche, wobei mindestens eines der Steuermodule (201, 301, 401, 500) oder das Leistungsausgangsmodul (105, 202, 203, 204, 215, 216, 217, 218, 302, 303, 304, 402, 503) so konfiguriert ist, dass es in mindestens eine elektrische Verdrahtung, einen Hauptsicherungskasten, eine Verteilertafel, einen Verteilerkasten, eine Steckdose, eine Industriesteckdose, ein Verlängerungskabel, eine Steckdosensäule, ein elektrisches Gerät, ein Möbel oder eine DIN-Schiene integriert werden kann.

13. Ein System (400) für nachfrageseitiges Management, umfassen:
ein lokales Energiesystem (404), das so konfiguriert ist, dass es elektrische Energie erzeugt;
mindestens eine Vorrichtung (100, 200, 300) nach einem der Ansprüche 1 bis 12 ; und
einen Server (403), der dafür konfiguriert ist:
Daten über die verfügbare Energie aus dem lokalen Energiesystem zu empfangen (404);
Überwachungsdaten, die mit dem Energieverbrauch der mindestens einen Vorrichtung (100, 200, 300) zusammenhängen, zu empfangen;
Steueranweisungen für die mindestens eine Vorrichtung (100, 200, 300) zur Anpassung des Energieverbrauchs auf der Grundlage der verfügbaren Energie zu bestimmen; und
Steueranweisungen an die mindestens eine Vorrichtung (100, 200, 300) zu senden.

14. Das System (400) nach Anspruch 13 , wobei der Server (403) so konfiguriert ist, dass er den Energieverbrauch und die verfügbare Energie auf der Grundlage der empfangenen Daten innerhalb eines vorbestimmten Intervalls vorhersagt; und
die Steueranweisungen Planungsinformationen zur Anpassung des Energieverbrauchs an die verfügbare Energie innerhalb des vorgegebenen Intervalls umfassen.

## Revendications

1. Appareil (100, 200, 300) comprenant :
un module de commande (201, 301, 401, 500) comprenant une interface de communication (105, 302, 303, 304, 402, 503) configurée pour transmettre et recevoir des données vers/depuis au moins un dispositif externe (403) et au moins un logement de bus configuré pour recevoir un module de sortie de puissance (105, 202, 203, 204, 215, 216, 217, 218, 302, 303, 304, 402, 503) ;
au moins un module de sortie de puissance (105, 202, 203, 204, 215, 216, 217, 218, 302, 303, 304, 402, 503) pouvant être fixé de manière amovible à au moins l'un du module de commande (201, 301, 401, 500) et d'un ou de plusieurs modules de sortie de puissance (105, 202, 203, 204, 215, 216, 217, 218, 302, 303, 304, 402, 503) avec une connexion de bus ; et
au moins un bus configuré pour fournir une connexion de données entre le module de commande (201, 301, 401, 500) et l'au moins un module de sortie de puissance (105, 202, 203, 204, 215, 216, 217, 218, 302, 303, 304, 402, 503) ;
dans lequel l'au moins un module de sortie de puissance (105, 202, 203, 204, 215, 216, 217, 218, 302, 303, 304, 402, 503) est configuré pour envoyer des données de surveillance au module de commande (201, 301, 401, 500) via la connexion de bus, les données de surveillance comprenant un identifiant spécifique au module de sortie de puissance et des données de consommation d'énergie associées au module de sortie de puissance (105, 202, 203, 204, 215, 216, 217, 218, 302, 303, 304, 402, 503) ;, **caractérisé en ce que**
le module de commande (201, 301, 401, 500) est configuré pour commander individuellement chaque module de sortie de puissance (105, 202, 203, 204, 215, 216, 217, 218, 302, 303, 304, 402, 503) sur la base des données de surveillance et des données reçues en provenance d'au moins un dispositif externe (403) ;
l'au moins un module de sortie de puissance (105, 202, 203, 204, 215, 216, 217, 218, 302, 303, 304, 402, 503) comprend au moins un d'un connecteur de bus ou d'un logement de bus configuré pour fixer de manière amovible le module de sortie de puissance (105, 202, 203, 204, 215, 216, 217, 218, 302, 303, 304, 402, 503) à au moins un du module de commande (201, 301, 401, 500) ou d'un ou de plusieurs modules de sortie de puissance (105, 202, 203, 204, 215, 216, 217, 218, 302, 303, 304, 402, 503) ; et
dans lequel le connecteur de bus ou le logement de bus est configuré pour connecter les modules de sorte que le module de commande (201, 301, 401, 500) soit configuré pour commander individuellement chaque module de sortie de puissance.

2. Appareil (100, 200, 300) selon la revendication 1, dans lequel le module de sortie de puissance (105, 202, 203, 204, 215, 216, 217, 218, 302, 303, 304, 402, 503) comprend au moins un capteur configuré pour détecter un dispositif couplé à la sortie de puissance du module de sortie de puissance (105, 202, 203, 204, 215, 216, 217, 218, 302, 303, 304, 402, 503), un commutateur configuré pour commander la sortie de puissance ou un circuit de mesure d'énergie configuré pour mesurer la consommation d'énergie de la sortie de puissance ; et
les données de surveillance comprennent des informations provenant d'au moins un du capteur, du commutateur électrique ou du circuit de mesure d'énergie.

3. Appareil (100, 200, 300) selon une quelconque revendication précédente, dans lequel le module de commande (201, 301, 401, 500) comprend un commutateur configuré pour commander la fourniture de puissance d'au moins une sortie de puissance des modules de sortie de puissance (105, 202, 203, 204, 215, 216, 217, 218, 302, 303, 304, 402, 503) en réponse à une entrée d'utilisateur.

4. Appareil (100, 200, 300) selon une quelconque revendication précédente, dans lequel le module de commande (201, 301, 401, 500) est configuré pour :
transmettre les données de surveillance au dispositif externe (403) ; et
commander l'au moins un module de sortie de puissance (105, 202, 203, 204, 215, 216, 217, 218, 302, 303, 304, 402, 503) sur la base des données reçues en provenance du dispositif externe (403) en réponse aux données de surveillance transmises.

5. Appareil (100, 200, 300) selon une quelconque revendication précédente, dans lequel le module de commande (201, 301, 401, 500) est configuré pour :
recevoir des données sur une énergie disponible associée à au moins une source d'énergie locale (404) en provenance du dispositif externe (403) ; et
commander l'au moins un module de sortie de puissance (105, 202, 203, 204, 215, 216, 217, 218, 302, 303, 304, 402, 503) sur la base de l'énergie disponible et des données de consommation d'énergie de l'au moins un module de sortie de puissance (105, 202, 203, 204, 215, 216, 217, 218, 302, 303, 304, 402, 503).

6. Appareil (100, 200, 300) selon une quelconque revendication précédente, dans lequel le module de commande (201, 301, 401, 500) est configuré pour recevoir des données associées à au moins un capteur ; et
commander l'au moins un module de sortie de puissance (105, 202, 203, 204, 215, 216, 217, 218, 302, 303, 304, 402, 503) sur la base des données de capteur.

7. Appareil (100, 200, 300) selon la revendication 6, dans lequel le module de commande (201, 301, 401, 500) est configuré pour :
prédire une consommation d'énergie de l'au moins un module de sortie de puissance (105, 202, 203, 204, 215, 216, 217, 218, 302, 303, 304, 402, 503) sur la base des données de consommation d'énergie ; et
programmer la désactivation et/ou l'activation d'un ou de plusieurs modules de sortie de puissance (105, 202, 203, 204, 215, 216, 217, 218, 302, 303, 304, 402, 503) sur la base de l'énergie disponible et de la consommation d'énergie prédite.

8. Appareil (100, 200, 300) selon une quelconque revendication précédente, dans lequel le module de commande (201, 301, 401, 500) est configuré pour :
détecter au moins un d'un mode veille d'un dispositif couplé à la sortie de puissance du module de sortie de puissance (105, 202, 203, 204, 215, 216, 217, 218, 302, 303, 304, 402, 503) ou d'un dysfonctionnement d'un dispositif couplé à la sortie de puissance du module de sortie de puissance (105, 202, 203, 204, 215, 216, 217, 218, 302, 303, 304, 402, 503) sur la base des données de consommation d'énergie ; et
désactiver la sortie de puissance du module de sortie de puissance (105, 202, 203, 204, 215, 216, 217, 218, 302, 303, 304, 402, 503) couplé au dispositif.

9. Appareil (100, 200, 300) selon la revendication 8, dans lequel le module de commande (201, 301, 401, 500) est en outre configuré pour indiquer à un utilisateur le dysfonctionnement détecté du dispositif couplé à la sortie de puissance du module de sortie de puissance (105, 202, 203, 204, 215, 216, 217, 218, 302, 303, 304, 402, 503).

10. Appareil (100, 200, 300) selon la revendication 9, dans lequel le module de commande (201, 301, 401, 500) est configuré pour recevoir un accusé de réception de la part de l'utilisateur en réponse à la notification ; et
activer la sortie de puissance du module de sortie de puissance (105, 202, 203, 204, 215, 216, 217, 218, 302, 303, 304, 402, 503) pour redémarrer le dispositif en réponse à l'accusé de réception.

11. Appareil selon une quelconque revendication précédente, dans lequel le module de commande (201, 301, 401, 500) est configuré pour :
recevoir des informations de synchronisation prédéfinies associées à au moins un module de prise de courant (105, 202, 203, 204, 215, 216, 217, 218, 302, 303, 304, 402, 503) ; et
programmer l'activation et/ou la désactivation de la sortie de puissance de l'au moins un module de sortie de puissance (105, 202, 203, 204, 215, 216, 217, 218, 302, 303, 304, 402, 503) sur la base des informations de synchronisation prédéfinies.

12. Appareil (100, 200, 300) selon une quelconque revendication précédente, dans lequel au moins l'un du module de commande (201, 301, 401, 500) ou du module de sortie de puissance (105, 202, 203, 204, 215, 216, 217, 218, 302, 303, 304, 402, 503) est configuré pour être intégré à au moins un d'un câblage électrique, d'une boîte à fusibles principale, d'un tableau de distribution, d'une boîte de jonction, d'un connecteur, d'un connecteur industriel, d'un cordon prolongateur, d'une tour à connecteurs, d'un dispositif électrique, d'un meuble ou d'un rail DIN.

13. Système (400) pour une gestion de la demande, comprenant :
un système d'énergie local (404) configuré pour produire une énergie électrique ;
au moins un appareil (100, 200, 300) selon l'une quelconque des revendications 1 à 12 ; et
un serveur (403) configuré pour :
recevoir des données indicatives d'une énergie disponible en provenance du système d'énergie local (404) ;
recevoir des données de surveillance associées à une consommation d'énergie en provenance de l'au moins un appareil (100, 200, 300) ;
déterminer des instructions de commande pour l'au moins un appareil (100, 200, 300) pour ajuster la consommation d'énergie sur la base de l'énergie disponible ; et
envoyer les instructions de commande à l'au moins un appareil (100, 200, 300).

14. Système (400) selon la revendication 13, dans lequel le serveur (403) est configuré pour prédire une consommation d'énergie et une énergie disponible sur la base des données reçues dans un intervalle prédéterminé ; et
les instructions de commande comprennent des informations de programmation pour ajuster la consommation d'énergie afin qu'elle corresponde à l'énergie disponible dans l'intervalle prédéterminé.
